# EUROPEAN PATENT APPLICATION

(11) **EP 2 184 921 A1**
(43) Date of publication of application: **12.05.2010**
(21) Application number: 08783956.9
(22) Date of filing: 12.08.2008
(51) Int. Cl.: H04N 7/167, H04L 29/06, H04L 9/00

(54) **PROCESSING METHOD, DEVICE AND SYSTEM FOR STREAM MEDIA CONTENTS**

(30) Priority: 16.08.2007 CN 200710138749
(71) Applicant: Huawei Technologies Co., Ltd., Longgang District, Shenzhen Guangdong 518129 (CN)
(72) Inventor: HUANG, Zijing, Shenzhen Guangdong 518129 (CN)
(74) Representative: Körber, Martin Hans
(86) International application number: PCT/CN2008/071963
(87) International publication number: WO 2009/021455

(57) **Abstract**

A method for processing streaming media contents is provided. The method includes: encrypting the streaming media contents and generating corresponding Entitlement Control Message (ECM) and Entitlement Management Message (EMM); and transmitting the encrypted streaming media contents, the ECM and the EMM to a terminal device, in which each I frame of the encrypted streaming media contents is segmented into multiple data packets for transmission and the ECM is transmitted during the transmission of the multiple data packets. A conditional access system and a system for processing streaming media contents are also provided. Through the above technical solutions, fuzzy screen phenomena in processing streaming media contents may be eliminated, channel-switching time or dark screen time may be reduced, and thus the user's experience may be improved.

## Description

### FIELD OF THE INVENTION

The present invention relates to the field of streaming media technology, particularly to a method, device and system for processing streaming media contents.

### BACKGROUND

In the deployment of various services related to streaming media, streaming media contents are convenient to be copied and distributed. The problem of piracy occurs inevitably in case of lacking security measures for protecting streaming media contents. Encrypted protection technology for streaming media is hence introduced. Content providers may protect their own streaming media contents and control the distribution of the contents by performing encrypted protection for the contents.

Conditional Access System (CA system), as one of existing encrypted protection systems for streaming media, protects streaming media contents through performing encryption and access control to the streaming media contents. The CA system generates two types of messages, Entitlement Control Message (ECM) and Entitlement Management Message (EMM). The ECM, also referred to as entitlement control information, is a special form of electronic key signal, which is encrypted at a transmitting end and then transmitted to a receiving end along with streaming media contents. The ECM is used for controlling a descrambler at the receiving end. The EMM is a kind of information for entitling a user or users to descramble a service or services. Similarly with the ECM, the EMM is encrypted at a transmitting end and then transmitted to a receiving end along with streaming media contents.

Since encrypted protection for streaming media contents greatly enhances the security of streaming media contents, refrains the problem of piracy to some extent and protects the benefits of content providers and operators, this technology has already been widely applied. In the related art, encrypted protection solution for streaming media contents of real-time streaming media service causes fuzzy screen or slow channel-switching, and encrypted protection solution for streaming media contents of non-real-time streaming media service causes fuzzy screen or long-time dark screen. Therefore, the two encrypted protection solutions for streaming media contents provided in the related art ultimately influence the user's experience.

### SUMMARY

A method, device and system for processing streaming media contents are provided for eliminating fuzzy screen in processing streaming media services, reducing channel-switching time or dark screen time and improving the user's experience.

A method for processing streaming media contents includes: encrypting the streaming media contents and generating corresponding ECM and EMM; and transmitting the encrypted streaming media contents, the ECM and the EMM, in which each I frame of the encrypted streaming media contents is segmented into multiple data packets for transmission and the ECM is transmitted during the transmission of the multiple data packets.

A CA system includes: an encryption module, configured to encrypt streaming media contents and generate corresponding ECM and EMM; a transmitting module, configured to transmit the encrypted streaming media contents, the ECM and the EMM, in which each I frame of the encrypted streaming media contents is segmented into multiple data packets for transmission and the ECM is transmitted during the transmission of the multiple data packets.

A system for processing streaming media contents includes: a CA system, configured to encrypt streaming media contents and generate corresponding ECM and EMM, and transmit the encrypted streaming media contents, the ECM and the EMM, in which each I frame of the encrypted streaming media contents is segmented into multiple data packets for transmission and the ECM is transmitted during the transmission of the multiple data packets; and a terminal device, configured to acquire the encrypted streaming media contents, the ECM and the EMM, decrypt the ECM with the EMM to obtain a content decryption key, and decrypt the encrypted streaming media contents with the content decryption key.

The technical solutions provided in embodiments of the present invention include encrypting the streaming media contents and generating corresponding ECM and EMM; and transmitting the encrypted streaming media contents, the ECM and the EMM, in which each I frame of the encrypted streaming media contents is segmented into multiple data packets for transmission and the ECM is transmitted during the transmission of the multiple data packets. Through the technical solutions, upon receiving an I frame, a terminal device may immediately receive an ECM corresponding to the I frame and decrypt streaming media contents, thus facilitating to eliminate fuzzy screen phenomena, reduce dark screen time, reduce channel-switching time and improve the user's experience.

### BRIEF DESCRIPTION OF THE DRAWINGS

Fig.1 is a structure diagram of an existing network for processing real-time streaming media service;

Fig.2 is a flow chart for processing real-time streaming media service;

Fig.3 is a structure diagram of an existing network for processing non-real-time streaming media service;

Fig.4 is a flow chart for processing non-real-time streaming media service;

Fig.5 and Fig.7 are flow charts for processing real-time streaming media service according to an embodiment of the present invention;

Fig.6 is a diagram illustrating a timing range for a CA system to transmit ECM according to an embodiment of the present invention;

Fig.8 and Fig.9 are flow charts for processing non-real-time streaming media service according to an embodiment of the present invention;

Fig.10A and Fig.10B are structure diagrams of a CA system for processing real-time streaming media service according to an embodiment of the present invention;

Fig.11A and Fig.11B are structure diagrams of a CA system for processing non-real-time streaming media service according to an embodiment of the present invention;

Fig.12A and Fig.12B are structure diagrams of a processing system for processing streaming media contents of real-time streaming media service according to an embodiment of the present invention; and

Fig.13A and Fig.13B are structure diagrams of a processing system for processing streaming media contents of non-real-time streaming media service according to an embodiment of the present invention.

### DETAILED DESCRIPTION

Methods according to embodiments of the present invention will be described in detail below with reference to the accompanying drawings of the description.

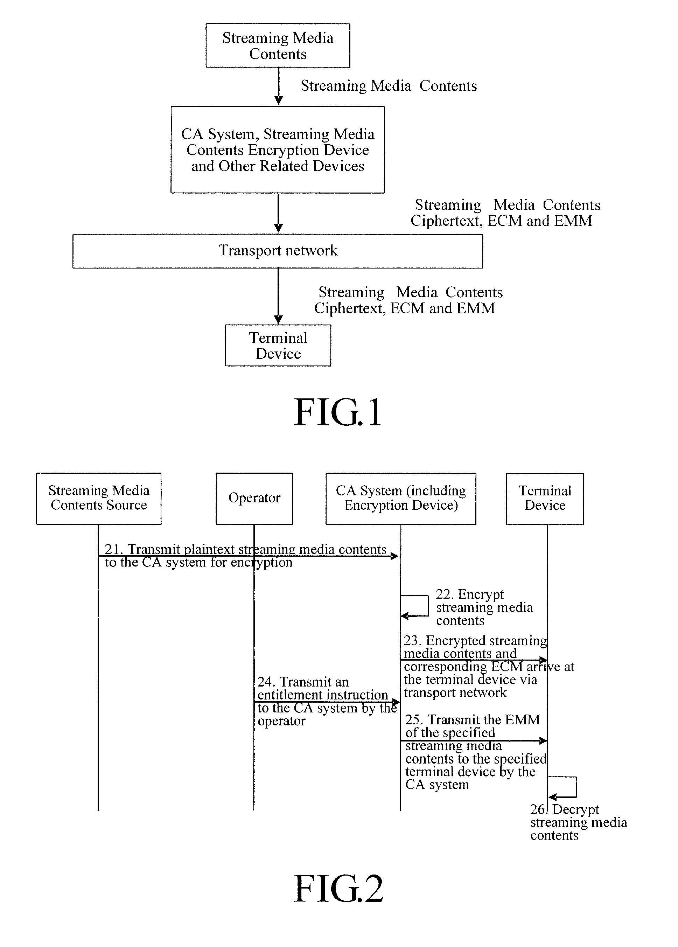

Real-time streaming media service is encrypted by an encryption device and then arrives at a user's terminal device via a transport network immediately. The structure of the network is shown in Fig.1. Streaming media contents transmitted from a streaming media content source are processed by a CA system, an encryption device and other relevant devices so as to generate streaming media content ciphertext. The streaming media content ciphertext arrives at a terminal device via the transport network. The streaming media encryption device may be a part of the CA system, which depends on specific implementations by various manufacturers. The specific traffic flow is shown in Fig.2, which includes the following steps.

Step 21: The streaming media contents transmitted from the streaming media content source are transmitted to the CA encryption device via the network.

Step 22: The streaming media contents are encrypted by the CA encryption device. In a Control Word (CW, i.e. content encryption/decryption key) period, CWs used for encrypting multi-channels of streaming media contents may be the same or different. Since CWs are carried in ECMs, the ECMs corresponding to each channel of streaming media contents are the same when the CWs are the same, and the ECMs corresponding to each channel of streaming media contents are different when the CWs are different. Since each channel of streaming media contents may correspond to one channel, ECMs corresponding to each channel may be the same or different.

Step 23: The encrypted streaming media contents and corresponding ECM arrive at the terminal device via the transport network. In a CW period, the carousel policy for the same ECM is to transmit at a fixed time interval.

Step 24: After a user subscribes for specified streaming media contents from an operator in a way, the operator notifies the CA system via an operation support system to transmit an EMM of the specified streaming media content to the user's terminal device.

Step 25: The CA system transmits the EMM of the specified streaming media contents to the specified terminal device according to the instruction transmitted by the operator.

Step 26: After obtaining the EMM of the specified streaming media contents, the terminal device may decrypt the corresponding ECM to obtain a CW, and decrypt the corresponding streaming media contents with the CW to obtain plaintext streaming media contents.

Through researching, it is found that the existing encrypted protection solution for streaming media contents of real-time streaming media service has the following shortcomings.

In the real-time streaming media service, when the CWs for encrypting each channel are different, the ECMs corresponding to each channel are also different. When switching among channels, it is required to acquire and decrypt the ECM corresponding to an object channel in time. If the terminal device fails to acquire and decrypt the ECM corresponding to the object channel in time, the terminal device can not acquire the CW corresponding to the current media stream in time, and thus fuzzy screen or slow channel-switching may occur, which influences the user's experience.

As described in step 23 of Fig.2, in a CW period, the carousel policy for the same ECM is to transmit at a fixed time interval. Typically, after the user initiates a channel-switching operation, the terminal device starts to acquire and decrypt the ECM and the media stream corresponding to the object channel. When the time point at which an ECM arrives at the terminal device lags behind the time point of the channel-switching operation, the ECM is the one required after the terminal device switches the channel. With the decrease of the difference between the time point at which the ECM arrives at the terminal device and the time point of the channel-switching operation, the time for the terminal device to acquire the ECM and decrypt the CW reduces. In order to decrease the difference, a method frequently used at present is to accelerate the ECM transmitting frequency. However, due to the limited resources of the terminal device, the method will cause that too much resources are used by the terminal device to filter useless ECMs, which possibly results in fuzzy screen. Therefore there is a restriction on the ECM transmitting frequency.

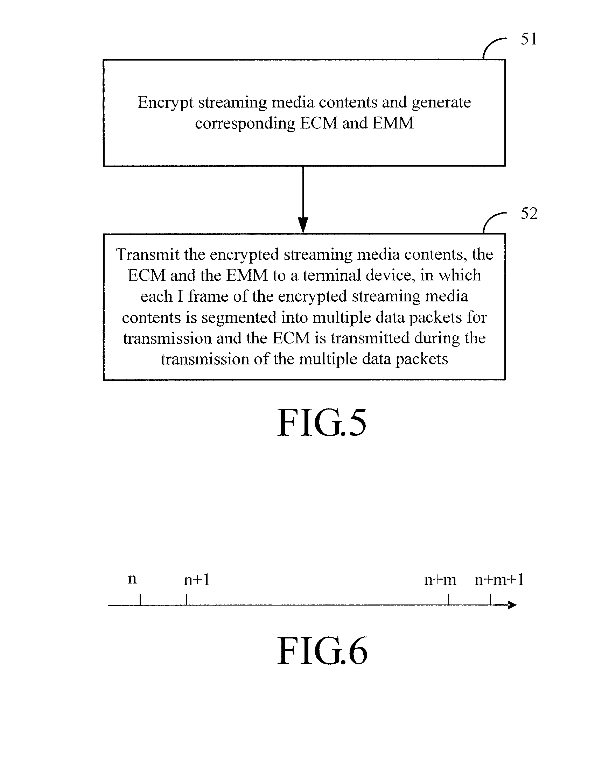

In order to solve the defects in the encrypted protection solution for streaming media content of real-time streaming media service, an embodiment of the present invention provides a flow for processing streaming media contents as shown in Fig.5.

Step 51: Streaming media contents are encrypted and corresponding ECM and EMM are generated.

Step 52: The encrypted streaming media contents, the ECM and the EMM are transmitted to a terminal device, in which each I frame of the encrypted streaming media contents is segmented into multiple data packets for transmission and the ECM is transmitted during the transmission of the multiple data packets.

The flow in Fig.5 is implemented for real-time streaming media contents. In step 52, one or more ECMs are transmitted between the transmissions of any two adjacent data packets of the multiple data packets. For example, when the terminal device switches from channel A to channel B, the first frame of data to be decoded is the I frame of channel B in which one I frame is segmented into multiple Transport Stream (TS) data packets for transmission. The timing range for transmitting ECM is shown in Fig.6 in which n represents the nth data packet that is transmitted after being encrypted, and similarly n+1 represents the (n+1)th data packet that is transmitted after being encrypted. Assuming that any one I frame is segmented into data packets in the range from n+1 to n+m for transmission, the transmitting timing for corresponding ECM may be between any two adjacent data packets among the (n+1)th data packet to the (n+m)th data packet.

In step 52, the ECM may also be transmitted at a fixed time interval. Compared with the existing policy in which ECM is transmitted at a fixed time interval, since the terminal device can acquire necessary ECM upon acquiring the first I frame after channel-switching, an optimized range of time for the terminal device to acquire necessary ECM is 0 to 1 ECM transmission period, that is, the decreased range of time for channel-switching is 0 to 1 ECM transmission period.

Based on the original policy for transmitting ECM at a fixed time interval, if the terminal device acquires necessary ECM immediately after channel-switching, that is, if the terminal device acquires the necessary ECM upon acquiring the first I frame of the encrypted streaming media contents after channel-switching, the optimized effect of the embodiment of the present invention is 0 second. If the necessary ECM arrives at the terminal device after channel-switching, the maximum interval between the time point at which the ECM arrives at the terminal device and the time point of the channel-switching operation is one ECM transmission period. In this case, the optimized effect of the embodiment of the present invention is one ECM transmission period, i.e. the maximum optimized effect that may be achieved. As can be seen, the optimized effect of the embodiment of the present invention ranges from 0 to 1 ECM transmission period.

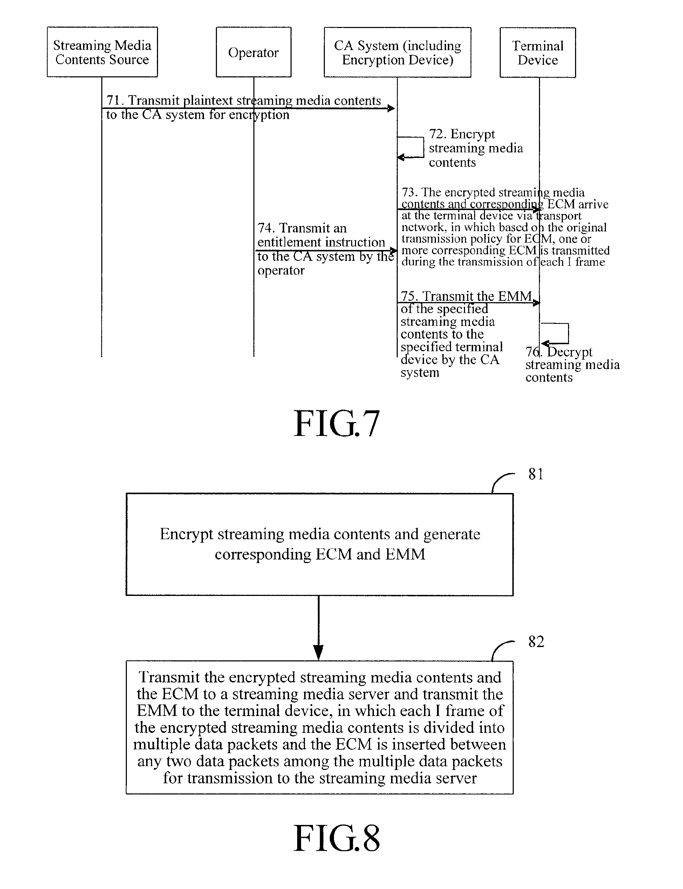

In a specific embodiment, a CA system encrypts streaming media contents and generates corresponding ECM and EMM, and transmits the encrypted streaming media contents and the ECM to a terminal device; an operator device transmits an entitlement instruction to the CA system; the CA system transmits the EMM to the terminal device according to the received entitlement instruction; and the terminal device decrypts the ECM with the EMM to obtain a content decryption key and decrypts the encrypted streaming media contents with the content decryption key. As shown in Fig.7, specific process flow is as follows.

Step 71: Streaming media contents transmitted from a streaming media content source are transmitted to a CA encryption device via a network.

Step 72: The streaming media contents are encrypted by the CA encryption device. In a CW period, CWs used for encrypting multi-channels of streaming media contents may be the same or different. Since CWs are carried in ECMs, the ECMs corresponding to each channel of streaming media contents are the same when the CWs are the same, and the ECMs corresponding to each channel of streaming media contents are different when the CWs are different. Since each channel of streaming media contents may correspond to one channel, ECMs corresponding to each channel may be the same or different.

Step 73: The encrypted streaming media contents and corresponding ECM arrive at the terminal device via the transport network. In a CW period, the carousel policy for the same ECM is to transmit at a fixed time interval. Each I frame of the encrypted streaming media contents is segmented into multiple data packets for transmission. One or more ECMs are transmitted during the transmission of the multiple data packets.

Step 74: After a user subscribes for specified streaming media contents from an operator in a way, the operator notifies the CA system via an operation support system to transmit an EMM of the specified streaming media content to the user's terminal device.

Step 75: The CA system transmits the EMM of the specified streaming media contents to the specified terminal device according to the instruction transmitted by the operator.

Step 76: After obtaining the EMM of the specified streaming media contents, the terminal device may decrypt the corresponding ECM to obtain a CW, and decrypt the corresponding streaming media contents with the CW to obtain plaintext streaming media contents.

In the embodiment of the present invention, in the process of real-time streaming media service, the CA system transmits the ECM at a fixed time interval when transmitting the encrypted streaming media contents and the corresponding ECM to the terminal device, and transmits one or more ECMs during the transmission of data packets corresponding to each I frame of the encrypted streaming media contents. Therefore, when the ECM arrives at the terminal device after channel-switching, the interval between the arrival time and the time of channel-switching operation decreases by 0 to 1 ECM transmission period, thus facilitating to eliminate fuzzy screen in processing real-time streaming media service, reduce channel-switching time and improve the user's experience.

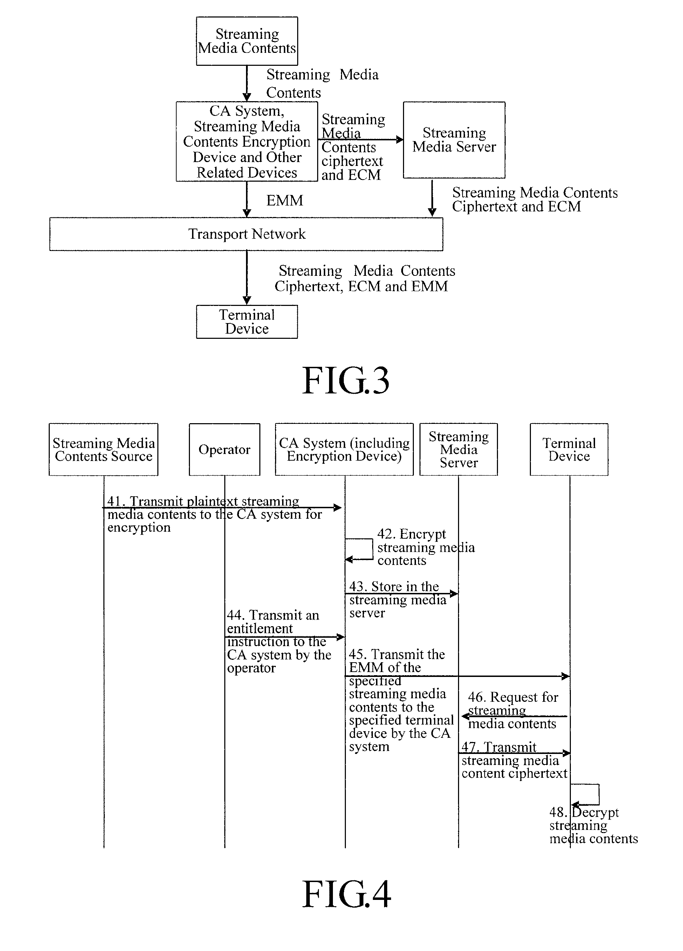

For non-real-time streaming media service, streaming media contents are stored in a network storage device after being protected by encryption. When a user wants to watch the streaming media contents, a terminal device requests and acquires related streaming media content ciphertext from the network storage device. The network storage device is generally referred to as a streaming media server. The network structure is shown in Fig.3. Non-real-time streaming media contents are stored in the streaming media server in form of a file after being encrypted, but not directly transmitted to the terminal device via a network. ECMs are stored in the streaming media server along with the streaming media contents, in which the ECMs and the streaming media server are stored in the same file in a time sequence. The specific traffic flow is shown in Fig.4, which includes the following steps.

Step 41: A CA system acquires plaintext streaming media contents from a streaming media content source.

Step 42: The CA system encrypts the plaintext media contents.

Step 43: The encrypted streaming media contents and corresponding ECM are stored together into the same file in the streaming media server. The insertion policy for ECM is to insert the same ECM in one CW period into the file at a fixed time interval.

Step 44: After a user subscribes for specified streaming media contents from an operator in a way, the operator notifies the CA system via an operation support system to transmit an EMM of the specified streaming media content to the user's terminal device.

Step 45: The CA system transmits the EMM of the specified streaming media contents to the specified terminal device according to the instruction of the operator.

Step 46: The user enables the terminal device to request streaming media content ciphertext from the streaming media server.

Step 47: The streaming media content ciphertext and corresponding ECM arrives at the terminal device via the transport network.

Step 48: After obtaining the EMM of the specified streaming media contents, the terminal device may decrypt the ECM to obtain a CW, and decrypt the corresponding streaming media contents with the CW to obtain plaintext streaming media contents.

Through researching, it is found that the existing encrypted protection solution for streaming media contents of non-real-time streaming media service has the following shortcomings.

In non-real-time streaming media service, the insertion policy for ECM is the same as the transmitting policy for ECM in the related art 1. Since one ECM carries CWs of both the current period and the next period, which achieves the object of transmitting CW prior to the transmission of streaming media contents, terminal device may acquire correct CW before decrypting media stream. Therefore, long time fuzzy screen or dark screen will not occur during normal playing. However, the terminal device may fail to acquire the ECM in time and thus long time fuzzy screen or dark screen might occur when, for example, the following operations are performed: just starting to play after the terminal device requests the streaming media content ciphertext from the streaming media server; skipping forward/skipping backward; resuming normal playing after skipping forward/skipping backward; and playing according to locations. The reason for the above problems is the same as that of the related art 1. In this case, processing non-real-time streaming media service with the related art 2 will also influence the user's experience.

In order to solve the defects in the encrypted protection solution for streaming media content of non-real-time streaming media service, an embodiment of the present invention provides a flow for processing streaming media contents as shown in Fig.8.

Step 81: Streaming media contents are encrypted and corresponding ECM and EMM are generated.

Step 82: The encrypted streaming media contents and the ECM are transmitted to a streaming media server, and the EMM is transmitted to a terminal device, in which each I frame of the encrypted streaming media contents is segmented into multiple data packets and the ECM is inserted between any two data packets of the multiple data packets for transmission to the streaming media server.

The flow in Fig.8 is implemented for non-real-time streaming media contents. Similarly with the flow in Fig.5, one or more ECMs may be inserted between any two data packets of the multiple data packets corresponding to an I frame.

In the flow in Fig.8, similarly with the flow in Fig.5, the ECM may be inserted among the multiple data packets corresponding to the I frame at a fixed time interval. The decreased range of time for the ECM to arrive at the terminal device is 0 to 1 ECM insertion period. Also as shown in Fig.6, n represents the nth data packet that is transmitted after being encrypted, and similarly n+1 represents the (n+1)th data packet that is transmitted after being encrypted. Assuming that any one I frame is segmented into data packets in the range from n+1 to n+m for transmission, the timing for inserting corresponding ECM into a file may be a position immediately after any one data packet among the (n+1)th data packet to the (n+m)th data packet.

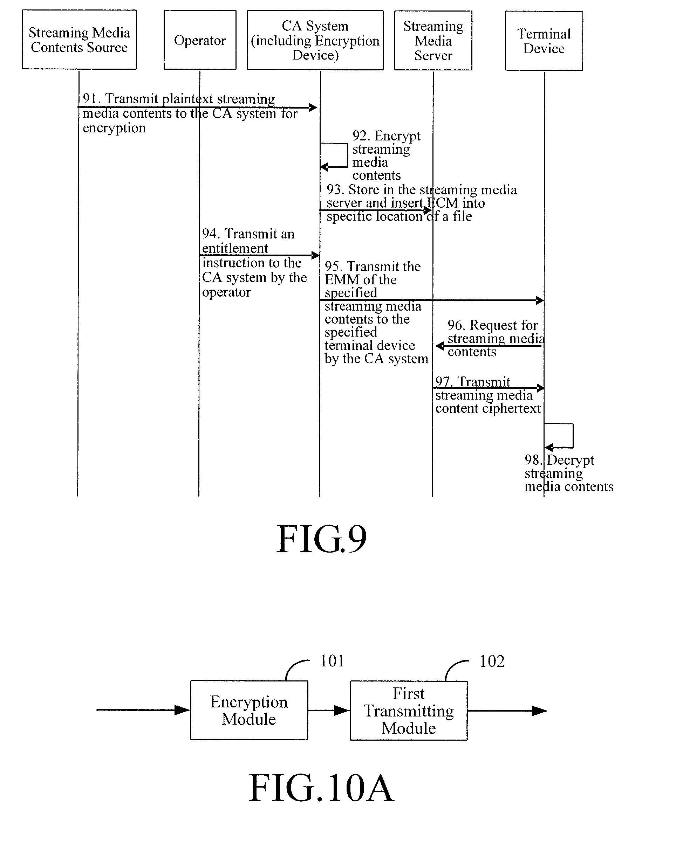

In one embodiment, a CA system may encrypt streaming media contents, generate corresponding ECM and EMM, transmit the encrypted streaming media contents and the ECM to an streaming media server and transmit the EMM to an terminal device; an operator device transmits an entitlement instruction to the CA system; the CA system transmits the EMM to the terminal device according to the received entitlement instruction; the terminal device acquires the encrypted streaming media contents and the ECM from the streaming media server, decrypts the ECM with the EMM to obtain an content decryption key, and decrypts the encrypted streaming media contents with the content decryption key. As shown in Fig.9, specific process flow is as follows.

Step 91: The CA system acquires plaintext streaming media contents from a streaming media content source.

Step 92: The CA system encrypts the plaintext streaming media contents.

Step 93: The encrypted streaming media contents and corresponding ECM are stored together in the same file in the streaming media server. The insertion policy for the ECM is to insert the same ECM in one CW period into a file at a fixed time interval. Further, each I frame of the encrypted streaming media contents is segmented into multiple data packets and the ECM is inserted between any two data packets of the multiple data packets.

Step 94: After a user subscribes for specified streaming media contents from an operator in a way, the operator notifies the CA system via an operation support system to transmit an EMM of the specified streaming media content to the user's terminal device.

Step 95: The CA system transmits the EMM of the specified streaming media contents to the specified terminal device according to the instruction of the operator.

Step 96: The user enables the terminal device to request streaming media content ciphertext from the streaming media server.

Step 97: The streaming media content ciphertext and corresponding ECM arrives at the terminal device via the transport network.

Step 98: After obtaining the EMM of the specified streaming media contents, the terminal device may decrypt the ECM to obtain a CW, and decrypt the corresponding streaming media contents with the CW to obtain plaintext streaming media contents.

In the present embodiment, in the process of non-real-time streaming media service, the CA system inserts the ECM in the encrypted streaming media contents at a fixed time interval when transmitting the encrypted streaming media contents and the corresponding ECM to the streaming media server, and inserts one or more ECMs in the data packets corresponding to each I frame of the encrypted streaming media contents. Therefore, the time at which the ECM arrives at the terminal device decreases by 0 to 1 ECM insertion period, thus facilitating to eliminate fuzzy screen in processing non-real-time streaming media service, reduce black screen time and improve the user's experience.

Based on the same inventive concept, an embodiment of the present invention provides a CA system. The structure of the CA system is shown in Fig.10A. The CA system includes an encryption module 101 and a first transmitting module 102. The encryption module 101 is configured to encrypt streaming media contents and generate corresponding ECM and EMM. The first transmitting module 102 is configured to transmit the encrypted streaming media contents, the ECM and the EMM to a terminal device. Each I frame of the encrypted streaming media contents is segmented into multiple data packets for transmission and the ECM is transmitted during the transmission of the multiple data packets.

The first transmitting module 102 may be further configured to transmit the ECM at a fixed time interval.

The first transmitting module 102 may be further configured to transmit one or more ECMs between the transmissions of any two adjacent data packets of the multiple data packets.

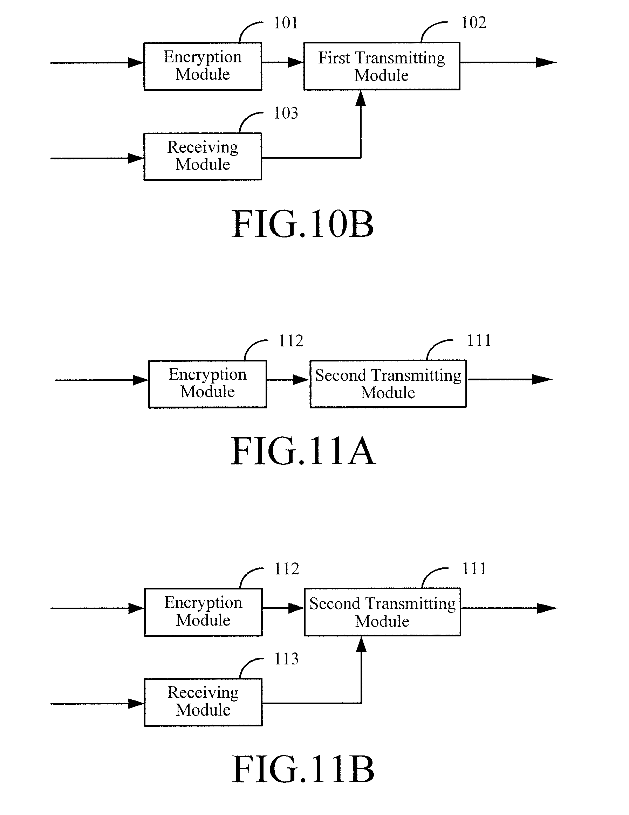

As shown in Fig.10B, in one embodiment, the CA system shown in Fig.10A may further include a receiving module 103 configured to receive an entitlement instruction transmitted by an operator device. In this case, the first transmitting module 102 is further configured to transmit the EMM to the terminal device according to the received entitlement instruction.

Based on the same inventive concept, an embodiment of the present invention further provides a CA system. The structure of the CA system is shown in Fig.11A. The CA system includes an encryption module 112 and a second transmitting module 111. The encryption module 112 is configured to encrypt streaming media contents and generate corresponding ECM and EMM. The second transmitting module 111 is configured to transmit the encrypted streaming media contents and the ECM to a streaming media server and transmit the EMM to the terminal device. Each I frame of the encrypted streaming media contents is segmented into multiple data packets and the ECM is inserted between any two data packets of the multiple data packets for transmission to the streaming media server.

The second transmitting module 111 may be further configured to insert the ECM among the multiple data packets at a fixed time interval.

The second transmitting module 111 may be further configured to insert one or more ECMs between any two data packets of the multiple data packets.

As shown in Fig.11B, in one embodiment, the CA system shown in Fig.11A may further include a receiving module 113 configured to receive an entitlement instruction transmitted by an operator device. In this case, the second transmitting module 111 is further configured to transmit the EMM to the terminal device according to the received entitlement instruction.

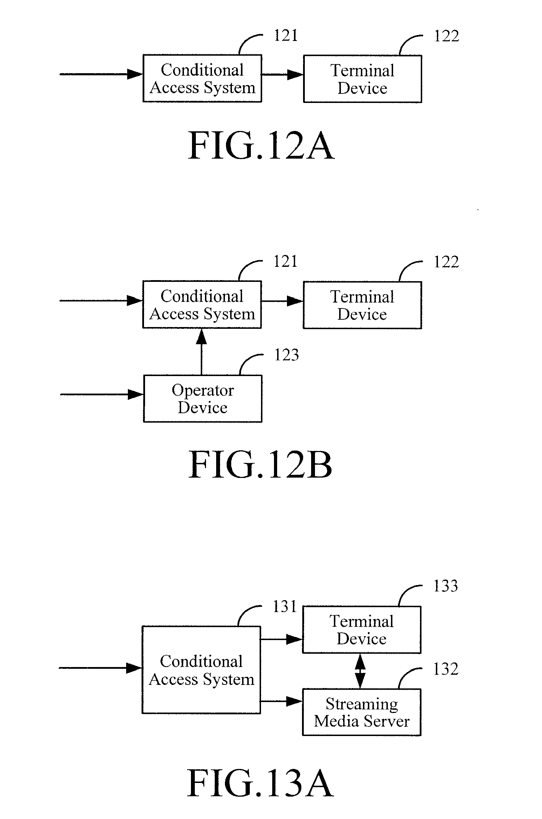

Based on the same inventive concept, an embodiment of the present invention further provides a system for processing streaming media contents. The structure of the system is shown in Fig.12A. The system includes a CA system 121 and a terminal device 122. The CA system 121 is configured to: encrypt streaming media contents and generate corresponding ECM and EMM; and transmit the encrypted streaming media contents, the ECM and the EMM, in which each I frame of the encrypted streaming media contents is segmented into multiple data packets for transmission and the ECM is transmitted during the transmission of the multiple data packets. The terminal device 122 is configured to receive the encrypted streaming media contents, the ECM and the EMM, decrypt the ECM with the EMM to obtain a content decryption key, and decrypt the encrypted streaming media contents with the content decryption key.

As shown in Fig.12B, in one embodiment, the system for processing streaming media contents shown in Fig.12A may further include an operator device 123 configured to transmit an entitlement instruction to the CA system 121. In this case, the CA system 121 is further configured to transmit the EMM to the terminal device 122 according to the entitlement instruction.

Based on the same inventive concept, an embodiment of the present invention further provides a system for processing streaming media contents. The structure of the system is shown in Fig.13A. The system includes a CA system 131, a streaming media server 132 and a terminal device 133. The CA system 131 is configured to: encrypt streaming media contents and generate corresponding ECM and EMM; and transmit the encrypted streaming media contents, the ECM and the EMM, in which each I frame of the encrypted streaming media contents is segmented into multiple data packets and the ECM is inserted between any two data packets of the multiple data packets for transmission. The streaming media server 132 is configured to receive the encrypted streaming media contents and the ECM transmitted by the CA system. The terminal device 133 is configured to receive the EMM transmitted by the CA system 131, acquire the ECM from the streaming media server 132, decrypt the ECM with the EMM to obtain a content decryption key and decrypt the encrypted streaming media contents with the content decryption key.

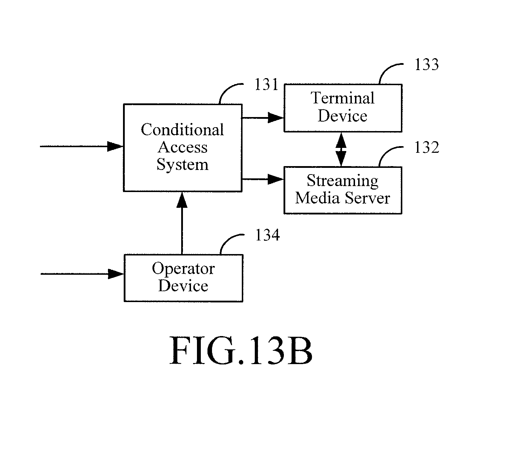

As shown in Fig.13B, in one embodiment, the system for processing streaming media contents shown in Fig.13A may further include an operator device 134 configured to transmit an entitlement instruction to the CA system 131. The CA system 131 is further configured to transmit the EMM to the terminal device 133 according to the entitlement instruction.

It would be understood by those skilled in the art that all or some steps in the above methods may be implemented through instructing relevant hardware to perform the steps by a program. The program may be stored in a computer readable storage medium that may include ROM, RAM, magnetic disk or optical disk.

In the embodiments of the present invention, in the process of real-time streaming media service, the CA system transmits the ECM at a fixed time interval when transmitting the encrypted streaming media contents and the corresponding ECM to the terminal device, and transmits one or more ECMs during the transmission of data packets corresponding to each I frame of the encrypted streaming media contents. Therefore, when the ECM arrives at the terminal device after channel-switching, the interval between the arrival time and the time of channel-switching operation decreases by 0 to 1 ECM transmission period, thus facilitating to eliminate fuzzy screen in processing real-time streaming media service, reduce channel-switching time and improve the user's experience.

In the process of non-real-time streaming media service, the CA system inserts the ECM in the encrypted streaming media contents at a fixed time interval when transmitting the encrypted streaming media contents and the corresponding ECM to the streaming media server, and inserts one or more ECMs in the data packets corresponding to each I frame of the encrypted streaming media contents. Therefore, the time at which the ECM arrives at the terminal device decreases by 0 to 1 ECM insertion period, thus facilitating to eliminate fuzzy screen in processing non-real-time streaming media service, reduce black screen time and improve the user's experience.

Those skilled in the art may make various changes and modifications to the present invention without departing from the spirit and scope of the present invention. The present invention is thus intended to include the changes and modifications if they are within the scope of the claims and equivalents thereof.

## Claims

1. A method for processing streaming media contents, comprising:
encrypting the streaming media contents and generating corresponding Entitlement Control Message (ECM) and Entitlement Management Message (EMM); and
transmitting the encrypted streaming media contents, the ECM and the EMM, wherein each I frame of the encrypted streaming media contents is segmented into multiple data packets for transmission and the ECM is transmitted during the transmission of the multiple data packets.

2. The method for processing streaming media contents of claim 1, wherein transmitting the ECM comprises:
transmitting the ECM at a fixed time interval.

3. The method for processing streaming media contents of claim 1, wherein transmitting the ECM during the transmission of the multiple data packets comprises:
transmitting one or more ECMs between the transmissions of any two data packets of the multiple data packets.

4. The method for processing streaming media contents of any one of claims 1-3, wherein the transmitting the encrypted streaming media contents, the ECM and the EMM comprises:
transmitting the encrypted streaming media contents, the ECM and the EMM to a terminal device; or
transmitting the encrypted streaming media contents and the ECM to a streaming media server and transmitting the EMM to the terminal device.

5. The method for processing streaming media contents of claim 4, wherein when transmitting the encrypted streaming media contents, the ECM and the EMM to the terminal device, the method further comprises:
performing a channel-switching operation by the terminal device; and
receiving, by the terminal device, the ECM when the terminal device receives a first I frame of the encrypted streaming media contents after the channel-switching operation.

6. The method for processing streaming media contents of claim 4, further comprising:
acquiring, by the terminal device, the encrypted streaming media contents and the ECM;
decrypting the ECM with the EMM to obtain a content decryption key; and
decrypting the encrypted streaming media contents with the content decryption key.

7. The method for processing streaming media contents of claim 4, wherein before transmitting the EMM, the method further comprises:
receiving an entitlement instruction transmitted by an operator device; and
transmitting the EMM to the terminal device according to the entitlement instruction.

8. A conditional access system, comprising:
an encryption module, configured to encrypt streaming media contents and generate corresponding Entitlement Control Message (ECM) and Entitlement Management Message (EMM); and
a transmitting module, configured to transmit the encrypted streaming media contents, the ECM and the EMM, wherein each I frame of the encrypted streaming media contents is segmented into multiple data packets for transmission and the ECM is transmitted during the transmission of the multiple data packets.

9. The conditional access system of claim 8, wherein the transmitting module is further configured to transmit the ECM to a terminal device at a fixed time interval.

10. The conditional access system of claim 8, wherein the transmitting module is further configured to transmit one or more ECMs between the transmissions of any two data packets of the multiple data packets.

11. The conditional access system of any one of claims 8-10, wherein the transmitting module comprises:
a first transmitting module, configured to transmit the encrypted streaming media contents, the ECM and the EMM to a terminal device; or
a second transmitting module, configured to transmit the encrypted streaming media contents and the ECM to a streaming media server and transmit the EMM to the terminal device.

12. The conditional access system of claim 11, further comprising:
a receiving module, configured to receive an entitlement instruction transmitted by an operator device;
wherein the transmitting module is further configured to transmit the EMM to the terminal device according to the entitlement instruction.

13. A system for processing streaming media contents, comprising:
a conditional access system, configured to:
encrypt streaming media contents and generate corresponding Entitlement Control Message (ECM) and Entitlement Management Message (EMM), and
transmit the encrypted streaming media contents, the ECM and the EMM, wherein each I frame of the encrypted streaming media contents is segmented into multiple data packets for transmission and the ECM is transmitted during the transmission of the multiple data packets; and
a terminal device, configured to:
acquire the encrypted streaming media contents, the ECM and the EMM,
decrypt the ECM with the EMM to obtain a content decryption key, and
decrypt the encrypted streaming media contents with the content decryption key.

14. The system for processing streaming media contents of claim 13, further comprising a streaming media server,
wherein transmitting, by the conditional access system, the encrypted streaming media contents, the ECM and the EMM comprises: transmitting, by the conditional access system, the encrypted streaming media contents and the ECM to the streaming media server and transmitting the EMM to the terminal device;
the streaming media server is configured to receive the encrypted streaming media contents and the ECM transmitted by the conditional access system; and
acquiring, by the terminal device, the encrypted streaming media contents, the ECM and the EMM comprises: receiving the EMM transmitted by the conditional access system and acquiring the ECM from the streaming media server.

15. The system for processing streaming media contents of claim 13 or 14, further comprising:
an operator device, configured to transmit an entitlement instruction to the conditional access system;
wherein the conditional access system is further configured to transmit the EMM to the terminal device according to the entitlement instruction.
